# EUROPÄISCHE PATENTSCHRIFT

(11) **EP 0 611 893 B1**
(45) Veröffentlichungstag und Bekanntmachung des Hinweises auf die Patenterteilung: **11.09.1996**
(21) Anmeldenummer: 94100902.9
(22) Anmeldetag: 22.01.1994
(51) Int. Cl.: F16C 11/06, B60G 7/00

(54) **Balgabdichtung**
Bellows seals
Dispositif d'étanchéité à soufflets

(30) Priorität: 17.02.1993 DE 4304774
(43) Veröffentlichungstag der Anmeldung: 24.08.1994
(73) Patentinhaber: TRW Fahrwerksysteme GmbH & Co. KG, D-40547 Düsseldorf (DE)
(72) Erfinder: Broszat, Lothar, D-40789 Monheim (DE)
(74) Vertreter: Stenger, Watzke & Ring Patentanwälte

(56) Entgegenhaltungen:
- EP-A- 0 295 392
- DE-B- 1 286 823
- GB-A- 1 132 169
- GB-A- 2 030 237
- US-A- 2 921 809

## Beschreibung

Die Erfindung betrifft eine Balgabdichtung für Zapfengelenke, vorzugsweise an Kraftfahrzeugen, mit einem das Gelenk umgebenden Balg, der einerseits am Gehäuse und andererseits auf dem Zapfen abgedichtet angeordnet ist.

Solche Balgabdichtungen werden bei Zapfengelenken eingesetzt, um das Eindringen von Schmutz und Feuchtigkeit in das Gelenk zu verhindern. Bei den bekannten Balgabdichtungen wird der Dichtungsbalg gehäuseseitig und zapfenseitig durch eine Verspannung des Balges außen in einer Gehäusenut bzw. auf dem Kugelzapfenhals beispielsweise mittels Spannringen festgelegt. Diese Balgabdichtungen haben den Nachteil, daß ein solchermaßen fest eingespannter Dichtungsbalg bei einer Auslenkung des Zapfens und insbesondere bei einer entgegengesetzten Verdrehung von Gehäuse und Zapfen in sich verdrillt wird. Die auftretenden Torsionskräfte bewirken eine Ermüdung und frühzeitige Zerstörung des Balgmaterials. Darüber hinaus bewirkt der beidseitig fest verspannte Dichtungsbalg ein zusätzliches Drehmoment im Zapfengelenk.

Balgabdichtungen, die auf einer Seite des Balgs drehbar abgedichtet am Gehäuse oder auf dem Zapfen von Zapfengelenken angeordnet sind, die keine zusätzlichen Drehmomente im Gelenk erzeugen und deren Balgmaterial nicht auf Torsion beansprucht wird, sind z.B. aus den Dokumenten DE-B-1 286 823 und GB-A-1 132 169 bekannt.

Der Erfindung liegt die **Aufgabe** zugrunde, eine Balgabdichtung mit erhöhter Lebensdauer und gleichzeitig guter Dichtwirkung zu schaffen.

Die **Lösung** dieser Aufgabenstellung durch die Erfindung ist dadurch gekennzeichnet, daß mindestens in einer Öffnung des Balges ein Dichtring stoffschlüssig eingesetzt ist, der über eine labyrinthartig ausgebildete Oberflächenstruktur mit einem Gegenring verdrehbar verbunden ist, der am Gehäuse bzw. am Zapfen festgelegt ist.

Bei der erfindungsgemäß weitergebildeten Balgabdichtung treten keine zusätzlichen, durch den Dichtungsbalg erzeugten Drehmomente im Zapfengelenk auf, da der eigentliche Dichtungsbalg und die jeweilige Verspannung am Gehäuse bzw. am Zapfen gegeneinander verdrehbar ausgebildet sind. Die Abdichtung gegen Schmutz und Feuchtigkeit erfolgt einerseits durch die feste Anbindung des Gegenrings am Gehäuse bzw. am Zapfen und andererseits durch die labyrinthartige Oberflächenstruktur von Dichtring und Gegenring, die ein Eindringen von Fremdstoffen in das Gelenk verhindert.

Gemäß einem weiteren Merkmal der Erfindung wird die labyrinthartige Oberflächenstruktur zwischen Dichtring und Gegenring durch ringförmige Vertiefungen und/oder Erhöhungen ausgebildet. Diese ringförmigen Vertiefungen und/oder Erhöhungen können dabei sowohl an einer in einer radialen Ebene liegenden Fläche als auch an einer sich anschließenden zylindrischen Mantelfläche des Dichtrings und des Gegenrings ausgebildet sein. Die Vertiefungen und Erhöhungen des Dichtrings und des Gegenrings sind so ausgebildet, daß im zusammengebautem Zustand die Erhöhungen des Dichtrings in die Vertiefungen des Gegenrings und umgekehrt die Erhöhungen des Gegenrings in die Vertiefungen des Dichtrings eingreifen. Durch die Ausbildung dieser formschlüssigen Verbindung wird ein einwandfreier Schmutz- und Feuchtigkeitsschutz für das Gelenk erreicht.

Bei einer bevorzugten Ausführungsform der Erfindung sind der Dichtring und der Gegenring über eine Schnappverbindung unverlierbar, aber relativ zueinander verdrehbar miteinander verbunden. Die Schnappverbindung wird dabei vorzugsweise durch einen das jeweils andere Bauteil untergreifenden Ringwulst gebildet. Der Ringwulst und die entsprechende Aufnahme am anderen Bauteil stellen eine Weiterführung der labyrinthartigen Oberflächenstruktur an den zylindrischen Mantelflächen des Dichtrings und des Gegenrings dar. Durch die Schnappverbindung sind der Dichtring und der Gegenring in axialer Richtung fest miteinander verbunden. Die gegensinnig ausgebildeten labyrinthartigen Oberflächenstrukturen des Dichtrings und des Gegenrings erlauben jedoch ein Verdrehen der beiden Bauteile relativ zueinander. Durch das Aufbringen einer Fettfüllung auf die Oberflächen der aufeinander aufliegenden Bauteile kann dabei sowohl das Verdrehen erleichtert als auch die Abdichtung gegen Schmutz und Feuchtigkeit erhöht werden.

Bei einer bevorzugten Ausführungsform der Erfindung ist der Dichtring in eine in einer Öffnung des Balges ausgebildete Aussparung einvulkanisiert. Hierdurch ergibt sich eine einwandfreie und leicht auszuführende stoffschlüssige Verbindung zwischen dem Balg und dem Dichtring.

Vorzugsweise wird weiterhin vorgeschlagen, daß der Dichtring in der zapfenseitigen Öffnung des Balges angeordnet ist und der Gegenring kraftschlüssig auf dem Zapfen festgelegt ist.

Um die Dichtwirkung noch zu erhöhen, wird weiter vorgeschlagen, daß der den Dichtring umgebende Rand der Balgöffnung den Dichtring und den Gegenring in axialer Richtung überragt. Diese Ränder liegen dann im zusammengesetzten Zustand des Zapfengelenks auf einem Gegenbauteil auf, wodurch eine zusätzliche Abdichtung erreicht wird, ohne daß jedoch eine unerwünschte Verspannung zwischen dem Balg und dem Gegenbauteil auftritt. Die Dichtwirkung des Randes der Balgöffnung kann erfindungsgemäß dadurch erhöht werden, daß er stirnseitig mit Dichtlippen ausgebildet ist.

Mit der Erfindung wird weiterhin vorgeschlagen, daß der Dichtring und der Gegenring aus Polyamid hergestellt sind. Die Verwendung von Polyamid hat den Vorteil, daß die Bauteile bis zu einer Temperatur von 150° C hitzebeständig sind.

Weitere Einzelheiten und Vorteile der Erfindung ergeben sich aus der nachfolgenden Beschreibung der zugehörigen Zeichnungen, in denen eine bevorzugte Ausführungsform einer erfindungsgemäßen Balgabdichtung dargestellt ist. In den Zeichnungen zeigen:
- Fig. 1: einen teilweisen Längsschnitt durch ein zusammengesetztes Zapfengelenk;
- Fig. 2: einen Längsschnitt durch eine erfindungsgemäße Balgabdichtung;
- Fig. 3a: einen Längsschnitt durch einen Dichtring und
- Fig. 3b: einen Längsschnitt durch einen Gegenring.

Das Zapfengelenk weist ein Gelenkgehäuse 1 und ein kipp- und drehbeweglich in dieses eingesetztes Gelenkelement auf, dessen angeformter Zapfen 2 aus dem Gelenkgehäuse 1 herausragt und dessen Ausschlag von einer Öffnung des Gelenkgehäuses 1 begrenzt ist.

Die Öffnung wird von einem Balg 3 aus einem elastischen Material verschlossen, der einerseits am Gelenkgehäuse 1 und andererseits auf dem Zapfen 2 das Zapfengelenk abdichtend angeordnet ist.

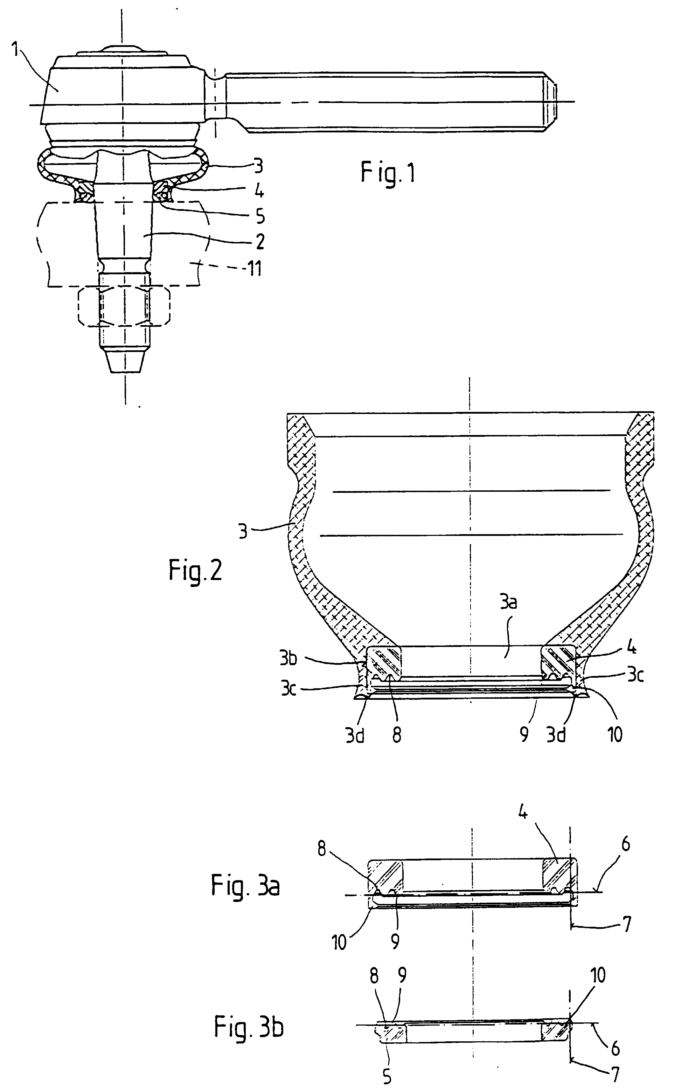

Der genaue Aufbau der Balgabdichtung ist den Abbildungen Fig. 2, 3a und 3b zu entnehmen. Bei der dargestellten Ausführungsform ist in der zapfenseitigen Balgöffnung 3a ein Dichtring 4 in einer Aussparung 3b des Balges 3 einvulkanisiert, welche mit einem Gegenring 5 zusammenwirkend die Abdichtung des Balges 3 bewirkt.

Um sowohl die erforderliche Abdichtung gegenüber Schmutz und Feuchtigkeit zu erreichen als auch eine Verdrillung des Balgmaterials beim Gegeneinanderverdrehen von Gelenkgehäuse 1 und Zapfen 2 zu verhindern, weisen Dichtring 4 und Gegenring 5 eine labyrinthartige Oberflächenstruktur auf. Diese labyrinthartige Oberflächenstruktur ist an einer in einer Radialebene liegenden Fläche 6 und einer sich anschließenden zylindrischen Mantelfläche 7 des Dichtringes 4 und des Gegenringes 5 ausgebildet. Die labyrinthartige Oberflächenstruktur wird durch abwechselnd ausgebildete Vertiefungen 8 und Erhöhungen 9 hervorgerufen, die so angeordnet sind, daß bei einer fertig montierten Balgabdichtung die Erhöhungen 9 des Dichtringes 4 in die Vertiefungen 8 des Gegenringes 5 und umgekehrt die Erhöhungen 9 des Gegenringes 5 in die Vertiefungen 8 des Dichtringes 4 eingreifen.

Der Dichtring 4 und der Gegenring 5 sind in axialer Richtung unverrückbar über eine Schnappverbindung miteinander verbunden. Die Schnappverbindung wird durch einen das jeweils andere Bauteil 4 bzw. 5 hintergreifenden Ringwulst 10 gebildet. Der Ringwulst 10 kann, wie dargestellt, dabei ein Teil der labyrinthartigen Oberflächenstruktur der Mantelflächen 7 des Dichtringes 4 und des Gegenringes 5 sein.

Bei dem in Fig. 1 und 2 dargestellten Balg 3 überragt ein Rand 3c der Balgöffnung 3a den Dichtring 4 und den Gegenring 5 in axialer Richtung, wodurch eine zusätzliche Abdichtung des Zapfengelenks hervorgerufen wird. Dieser Rand 3c liegt, wie in Fig. 1 ersichtlich, auf einem Gegenbauteil 11 auf, welches im fertigmontierten Zustand des Zapfengelenks auf dem Zapfen 2 angeordnet ist. Die Dichtwirkung des Randes 3c kann dabei durch stirnseitig ausgebildete Dichtlippen 3d erhöht werden.

Eine solchermaßen ausgebildete Balgabdichtung zeichnet sich dadurch aus, daß bei einem Verdrehen von Gelenkgehäuse 1 und Zapfen 2 gegeneinander keine Verdrillung im Balg 3 auftritt, da sich der auf dem Zapfen 2 festgelegte Gegenring 5 in dem in den Balg 3 einvulkanisierten Dichtring 4 frei drehen kann. Die durch Vertiefungen 8 und Erhöhungen 9 ausgebildeten labyrinthartigen Oberflächenstrukturen des Dichtringes 4 und des Gegenringes 5 verhindern den Eintritt von Schmutz und Feuchtigkeit in das Gelenk. Um das gegenseitige Verdrehen von Dichtring 4 und Gegenring 5 zu erleichtern und einen zusätzlichen Schmutz- und Feuchtigkeitsschutz zu erzeugen, kann eine Fettfüllung auf die Oberflächen des Dichtringes 4 und des Gegenringes 5 aufgebracht werden. Selbstverständlich ist es auch möglich, daß die Abdichtung mittels Dichtring 4 und Gegenring 5 gelenkgehäuseseitig ausgebildet ist.

### Bezugszeichenliste :

- 1: Gelenkgehäuse
- 2: Zapfen
- 3: Balg
- 3a: Balgöffnung
- 3b: Aussparung
- 3c: Rand
- 3d: Dichtlippe
- 4: Dichtring
- 5: Gegenring
- 6: Fläche
- 7: Mantelfläche
- 8: Vertiefung
- 9: Erhöhung
- 10: Ringwulst
- 11: Gegenbauteil

## Patentansprüche

1. Balgabdichtung für Zapfengelenke, vorzugsweise an Kraftfahrzeugen, mit einem das Gelenk umgebenden Balg, der einerseits am Gelenkgehäuse und andererseits auf dem Zapfen abgedichtet angeordnet ist,
**dadurch gekennzeichnet,**
daß mindestens in einer Öffnung des Balges (3) ein Dichtring (4) stoffschlüssig eingesetzt ist, der über eine labyrinthartig ausgebildete Oberflächenstruktur mit einem Gegenring (5) verdrehbar verbunden ist, der am Gelenkgehäuse (1) bzw. am Zapfen (2) festgelegt ist.

2. Balgabdichtung nach Anspruch 1, dadurch gekennzeichnet, daß die labyrinthartige Oberflächenstruktur zwischen Dichtring (4) und Gegenring (5) durch ringförmige Vertiefungen (8) und/oder Erhöhungen (9) gebildet ist.

3. Balgabdichtung nach Anspruch 2, dadurch gekennzeichnet, daß die ringförmigen Vertiefungen (8) und/oder Erhöhungen (9) sowohl an einer in einer radialen Ebene liegenden Fläche (6) als auch an einer sich anschließenden zylindrischen Mantelfläche (7) ausgebildet sind.

4. Balgabdichtung nach mindestens einem der Ansprüche 1 bis 3, dadurch gekennzeichnet, daß der Dichtring (4) und der Gegenring (5) durch eine Schnappverbindung miteinander unverlierbar, aber relativ zueinander verdrehbar verbunden sind.

5. Balgabdichtung nach Anspruch 4, dadurch gekennzeichnet, daß die Schnappverbindung durch einen das jeweils andere Bauteil (4) bzw. (5) hintergreifenden Ringwulst (10) gebildet ist.

6. Balgabdichtung nach mindestens einem der Ansprüche 1 bis 5, dadurch gekennzeichnet, daß der Dichtring (4) in eine in einer Öffnung des Balges (3) ausgebildete Aussparung (3b) einvulkanisiert ist.

7. Balgabdichtung nach mindestens einem der Ansprüche 1 bis 6, dadurch gekennzeichnet, daß der Dichtring (4) in der zapfenseitigen Balgöffnung (3a) des Balges (3) angeordnet ist.

8. Balgabdichtung nach Anspruch 7, dadurch gekennzeichnet, daß der Gegenring (5) kraftschlüssig auf dem Zapfen (2) festgelegt ist.

9. Balgabdichtung nach Anspruch 7 oder 8, dadurch gekennzeichnet, daß der den Dichtring (4) umgebende Rand (3c) der Balgöffnung (3a) den Dichtring (4) und den Gegenring (5) in axialer Richtung überragt.

10. Balgabdichtung nach Anspruch 9, dadurch gekennzeichnet, daß der Rand (3c) der Balgöffnung (3a) stirnseitig mit Dichtlippen (3d) ausgebildet ist.

11. Balgabdichtung nach mindestens einem der Ansprüche 1 bis 10, dadurch gekennzeichnet, daß der Dichtring (4) und der Gegenring (5) aus Polyamid hergestellt sind.

## Claims

1. Bellows-type seal for pivot joints, preferably on motor vehicles, with a bellows which surrounds the joint and is disposed, in a sealed manner, on the joint housing on one hand and on the pivot on the other,
characterized in that
a sealing ring (4), which is connected, in a turnable manner via a surface structure of labyrinth-like construction, to a counter-ring (5) which is secured in position on the joint housing (1) or on the pivot (2), is inserted in a material-locking manner at least in one opening in the bellows (3).

2. Bellows-type seal according to claim 1, characterized in that the labyrinth-like surface structure between the sealing ring (4) and the counter-ring (5) is constituted by annular depressions (8) and/or elevations (9).

3. Bellows-type seal according to claim 2, characterized in that the annular depressions (8) and/or elevations (9) may be constructed both on a face (6) located in a radial plane and also on an adjoining cylindrical superficies (7).

4. Bellows-type seal according to at least one of claims 1 to 3, characterized in that the sealing ring (4) and counter-ring (5) are connected to one another, by a snap connection, so as to be non-losable but capable of turning relative to one another.

5. Bellows-type seal according to claim 4, characterized in that the snap connection is constituted by an annular bead (10) which engages behind the other component (4) or (5) in each case.

6. Bellows-type seal according to at least one of claims 1 to 5, characterized in that the sealing ring (4) is vulcanized into a recess (3b) constructed in an opening in the bellows (3).

7. Bellows-type seal according to at least one of claims 1 to 6, characterized in that the sealing ring (4) is disposed in the opening (3a) in the bellows (3) at the pivot end.

8. Bellows-type seal according to claim 7, characterized in that the counter-ring (5) is secured in position, in a force-locking manner, on the pivot (2).

9. Bellows-type seal according to claim 7 or 8,
characterized in that that edge (3c) of the bellows opening (3a) which surrounds the sealing ring (4) projects above the sealing ring (4) and the counter-ring (5) in the axial direction.

10. Bellows-type seal according to claim 9, characterized in that the edge (3c) of the bellows opening (3a) is constructed with sealing lips (3d) at the end face.

11. Bellows-type seal according to at least one of claims 1 to 10, characterized in that the sealing ring (4) and the counter-ring (5) are manufactured from polyamide.

## Revendications

1. Dispositif d'étanchéité à soufflet pour articulations à pivot, de préférence pour des véhicules à moteur, avec un soufflet qui entoure l'articulation, soufflet qui est disposé d'un côté sur le boîtier de l'articulation et de l'autre côté sur le pivot, dispositif d'étanchéité à soufflet caractérisé en ce qu'au moins est insérée, dans une ouverture du soufflet (3), une bague d'étanchéité (4) par engagement de la matière, bague qui est reliée de façon à pouvoir tourner avec une bague opposée (5) au moyen d'une structure superficielle ayant le type d'un labyrinthe, la bague opposée étant fixée sur le boîtier de l'articulation (1) ou sur le pivot (2).

2. Dispositif d'étanchéité à soufflet selon la revendication 1, caractérisé en ce que la structure superficielle, qui a le type d'un labyrinthe, est formée entre la bague d'étanchéité (4) et la bague opposée (5) par des renfoncements (8) et/ou des éminences (9) de forme annulaire.

3. Dispositif d'étanchéité à soufflet selon la revendication 2, caractérisé en ce que les renfoncements (8) et/ou les éminences (9) de forme annulaire sont constitués aussi bien sur une surface (6), se trouvant dans un plan radial, que sur une surface enveloppante (7) cylindrique s'y raccordant.

4. Dispositif d'étanchéité à soufflet selon au moins l'une des revendications 1 à 3, caractérisé en ce que la bague d'étanchéité (4) et la bague opposée (5) sont reliées l'une à l'autre de façon imperdable par un assemblage à enclenchement, mais peuvent tourner l'une par rapport à l'autre.

5. Dispositif d'étanchéité à soufflet selon la revendication 4, caractérisé en ce que l'assemblage à enclenchement est formé par un bourrelet annulaire (10) qui vient en prise en arrière respectivement de l'autre partie (4) ou (5).

6. Dispositif d'étanchéité à soufflet selon au moins l'une des revendications 1 à 5, caractérisé en ce que la bague d'étanchéité (4) est vulcanisée dans un évidement (3b) constitué dans une ouverture du soufflet (3).

7. Dispositif d'étanchéité à soufflet selon au moins l'une des revendications 1 à 6, caractérisé en ce que la bague d'étanchéité (4) est disposée dans l'ouverture (3a) du soufflet (3), située du côté du pivot.

8. Dispositif d'étanchéité à soufflet selon la revendication 7, caractérisé en ce que la bague opposée (5) est fixée par engagement à friction sur le pivot (2).

9. Dispositif d'étanchéité à soufflet selon la revendication 7 ou 8, caractérisé en ce que le bord (3c), qui entoure la bague d'étanchéité (4), de l'ouverture du soufflet (3a) surplombe la bague d'étanchéité (4) et la bague opposée (5) dans le sens axial.

10. Dispositif d'étanchéité à soufflet selon la revendication 9, caractérisé en ce que le bord (3c) de l'ouverture du soufflet (3a) est muni du côté frontal de lèvres d'étanchéité (3d).

11. Dispositif d'étanchéité à soufflet selon au moins l'une des revendications 1 à 10, caractérisé en ce que la bague d'étanchéité (4) et la bague opposée (5) sont fabriquées en polyamide.
